(19) Europäisches Patentamt
European Patent Office
Office européen des brevets

(11) **EP 3 050 682 B1**

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(51) Int Cl.:
***B25J 9/16*** *(2006.01)*

(21) Anmeldenummer: **15003447.8**

(22) Anmeldetag: **03.12.2015**

(54) **VERFAHREN UND SYSTEM ZUM BETREIBEN UND/ODER ÜBERWACHEN EINER MEHRACHSIGEN MASCHINE**

METHOD AND SYSTEM FOR OPERATING AND/OR MONITORING A MULTI-AXLE MACHINE

PROCÉDÉ ET SYSTÈME DE FONCTIONNEMENT ET/OU DE SURVEILLANCE D'UNE MACHINE MULTIAXIALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2015 DE 102015001203**

(43) Veröffentlichungstag der Anmeldung:
**03.08.2016 Patentblatt 2016/31**

(73) Patentinhaber: **KUKA Deutschland GmbH 86165 Augsburg (DE)**

(72) Erfinder:
• **Monreal, Karsten 86391 Stadtbergen (DE)**
• **Angeli, Carsten 86169 Augsburg (DE)**

(74) Vertreter: **Schlotter, Alexander Carolus Paul Wallinger Ricker Schlotter Tostmann Patent- und Rechtsanwälte Partnerschaft mbB Zweibrückenstrasse 5-7 80331 München (DE)**

(56) Entgegenhaltungen:
EP-A1- 1 806 837          EP-A2- 2 108 933
EP-A2- 3 017 917          WO-A1-2010/025944
DE-A1-102012 003 479

**Beschreibung**

Die vorliegende Erfindung betrifft ein Verfahren zum Ermitteln einer Reaktionszeit und/oder eines Bewegungsspiels einer Bremse einer Achse einer mehrachsigen Maschine, insbesondere eines Roboters, ein Verfahren zum Betreiben und/oder Überwachen der Maschine unter Berücksichtigung dieser Reaktionszeit bzw. dieses Bewegungsspiels, sowie ein System und ein Computerprogrammprodukt zur Durchführung eines hier beschriebenen Verfahrens.

Bremsen von Achsen mehrachsiger Maschinen wie insbesondere von Robotern weisen eine Reaktionszeit bzw. Schließzeit zwischen einem Schalten der Bremse und einem Reaktionszeitpunkt auf, ab dem die Bremse einen Bewegungszustand der zugeordneten Achse ändert bzw. einen Wechsel des Bewegungszustands bewirkt. Ein Bewegungszustand kann insbesondere eine Drehzahl, eine Drehzahländerung, eine Geschwindigkeit oder eine Beschleunigung bzw. Verzögerung der Achse umfassen, insbesondere sein. Eine Geschwindigkeitsänderung bzw. eine Drehzahländerung im Sinne einer Änderung bzw. eines Wechsels des Bewegungszustands kann beispielsweise durch eine relative Änderung der Bezugsgröße Drehzahl bzw. Geschwindigkeit um mehr als etwa 2 Prozent, um mehr als etwa 5 Prozent, besonders bevorzugt um mehr als etwa 10 Prozent und insbesondere um mehr als etwa 20 Prozent definiert sein. Um eine vorbestimmte Beschleunigung bzw. Verzögerung zu bewirken, muss die Bremse eine bestimme Mindestbremskraft aufbringen, um dadurch den Bewegungszustand zu ändern. Insbesondere kann die Bremse auch mit einer (maximalen) Nennbremskraft bremsen. Analog weisen die Bremsen eine Öffnungszeit zwischen einem Schalten der Bremse und einem Reaktionszeitpunkt auf, ab dem die Bremse höchstens noch eine bestimmte Maximalbremskraft aufbringt bzw. aufbringen kann, insbesondere vollständig gelüftet ist bzw., wenigstens im Wesentlichen, keine Bremskraft mehr aufbringt bzw. aufbringen kann.

Eine solche Schließ- bzw. Öffnungszeit wird vorliegend zur kompakteren Darstellung allgemein als Reaktionszeit der Bremse bezeichnet. Sie kann insbesondere von mechanischen, hydraulischen, pneumatischen, (elektro)magnetischen und/oder signal- und/oder energietechnischen Trägheiten, einem Verschleiß der Bremse und dergleichen abhängen.

Darüber hinaus weisen geschlossene Bremsen ein Bewegungsspiel auf, um das die Achse durch eine bestimmte Kraft, insbesondere in Höhe der (maximalen) Nennbremskraft, bewegt werden kann. Auch ein solches Bewegungsspiel kann insbesondere von einem Verschleiß der Bremse abhängen.

Eine Kenntnis einer aktuellen Reaktionszeit und/oder eines solchen Bewegungsspiels kann vorteilhafterweise ein Betreiben und/oder Überwachen der Maschine verbessern. So kann beispielsweise bei bekannter aktueller Reaktionszeit die Bremse entsprechend früher oder später geschaltet werden, anstatt hierfür bei einer Bahnplanung theoretische Maximal- bzw. Worstcase-Werte zugrunde zu legen. Gleichermaßen kann zum Beispiel ein bekanntes aktuelles Bewegungsspiel bei der Bahnplanung berücksichtigt und die Achse entsprechend nachgestellt werden.

Überschreitet eine bekannte aktuelle Reaktionszeit bzw. ein bekanntes aktuelles Bewegungsspiel einen vorgegebenen Grenzwert, kann ein Fehlzustand der so überwachten Maschine detektiert werden.

Aus der EP 2 108 933 A2 ist ein Verfahren zum Prüfen einer Bremse eines Roboters bekannt, bei dem eine vorgegebene Antriebskraft auf den Roboter aufgebracht, die Bremse geschlossen eine Bewegung des Roboters erfasst und die Bremse auf Basis der erfassten Bewegung bewertet wird.

Die DE 10 2012 003 479 A1 offenbart ein Verfahren zum Ausführen eines Manipulatorprozesses mit wenigstens zwei Manipulatorposen mit einem Manipulator, insbesondere Roboter, wobei der Manipulator wenigstens ein Antriebsmittel aufweist, welches einen Motor und eine Bremse aufweist, mit den Schritten: Anfahren einer Manipulatorpose; Stillsetzen wenigstens eines Antriebsmittels; Schließen wenigstens einer Bremse dieses Antriebsmittels; Reduktion der Energiezufuhr des Antriebsmittels; Erhöhen der Energiezufuhr des Antriebsmittels; Öffnen der geschlossenen Bremse; Anfahren einer weiteren Manipulatorpose.

Aufgabe der vorliegenden Erfindung ist es daher, einen Betrieb und/oder eine Überwachung einer mehrachsigen Maschine, insbesondere eines Roboters zu verbessern.

Diese Aufgabe wird durch ein Verfahren zum Ermitteln einer Reaktionszeit einer Bremse mit den Merkmalen des Anspruchs 1 gelöst. Ansprüche 7, 8 stellen ein Verfahren zum Betreiben bzw. Überwachen einer mehrachsigen Maschine unter Berücksichtigung einer Reaktionszeit bzw. eines Bewegungsspiels unter Schutz, die bzw. das nach einem hier beschriebenen Verfahren ermittelt worden ist, Ansprüche 9, 10 ein System bzw. Computerprogrammprodukt zur Durchführung eines hier beschriebenen Verfahrens. Die Unteransprüche betreffen vorteilhafte Weiterbildungen. Nach einem ersten Aspekt der vorliegenden Erfindung weist ein Verfahren zum Ermitteln einer Reaktionszeit einer Bremse einer Achse einer mehrachsigen Maschine, insbesondere eines Roboters, die Schritte auf:

    a) Aktuieren der Achse;
    b) Schalten der Bremse; und
    c) Ermitteln einer Reaktionszeit zwischen einem Schaltzeitpunkt der Bremse und einem Reaktionszeitpunkt, zu dem ein Bewegungszustand der Achse wechselt.

Dabei wird in einer Ausführung die Bremse geschaltet und der Reaktionszeitpunkt ermittelt, während die Achse aktuiert wird bzw. ist. Bevorzugt kann die Aktuierung der Achse zum Erkennen des Reaktionszeitpunkts oder mit einem vorbestimmten Zeitversatz danach gestoppt werden. Insbesondere kann die Achse mittels des Antriebs solange mit konstanter Geschwindigkeit aktuiert werden, bis erkannt wurde, dass die Bremse greift bzw. dass der Reaktionszeitpunkt erreicht ist. Dieses Erkennen kann beispielsweise mittels Kraft-Momenten-Sensoren erfolgen, welche die zwischen dem Antrieb und der Achse wirkenden Kräfte bzw. Momente erfasst. Alternativ oder zusätzlich kann das Erkennen auch auf Grundlage der Stromaufnahme durch den Antrieb erfolgen. Die Reaktionszeit kann in einer Ausführung insbesondere eine Schließzeit der Bremse sein. Dann wird in einer Ausführung die Bremse in Schritt b) von einem geöffneten in einen geschlossenen Zustand geschaltet. Der Reaktionszeitpunkt kann beispielsweise ein Zeitpunkt sein, zu dem eine vorbestimmte Drehzahländerung festgestellt werden kann. Insbesondere kann der Reaktionszeitpunkt als Zeit definiert sein, bei welcher die Drehzahl der Achse um mehr als etwa 1 Prozent, bevorzugt um mehr als etwa 5 Prozent und besonders bevorzugt um mehr als etwa 10 Prozent gegenüber der Drehzahl zum Schaltzeitpunkt reduziert ist.

Als Alternative kann der Reaktionszeitpunkt auch als die Zeit definiert sein, bei welcher die Achse anhält, insbesondere ihre Geschwindigkeit einen vorgegebenen Maximalwert unterschreitet, vorzugsweise zu Null wird.

Insbesondere unter der Bedingung, dass zum Schaltzeitpunkt eine unbeschleunigte Bewegung der Achse erfolgt, dass heißt die Geschwindigkeit der Achse konstant ist, das auf die Achse vom Antrieb angelegte Moment konstant ist und die Beschleunigung der Achse gleich null ist, können weitere Kriterien zur Erkennung des Reaktionszeitpunktes verwendet werden.

Der Reaktionszeitpunkt kann beispielsweise ein Zeitpunkt sein, zu dem eine vorbestimmte Geschwindigkeitsänderung festgestellt werden kann. Insbesondere kann der Reaktionszeitpunkt als Zeit definiert sein, bei welcher die Geschwindigkeit der Achse um mehr als etwa 1 Prozent, bevorzugt um mehr als etwa 5 Prozent und besonders bevorzugt um mehr als etwa 10 Prozent bezogen auf die Drehzahl zum Schaltzeitpunkt oder bezogen auf eine Maximalgeschwindigkeit der Achse reduziert ist.

Der Reaktionszeitpunkt kann weiter beispielsweise ein Zeitpunkt sein, zu dem eine vorbestimmte Beschleunigung festgestellt werden kann. Insbesondere kann der Reaktionszeitpunkt als Zeit definiert sein, bei welcher der Betrag der Beschleunigung der Achse mehr als etwa 1 Prozent, bevorzugt mehr als etwa 5 Prozent und besonders bevorzugt mehr als etwa 10 Prozent beträgt bezogen auf ein maximales Beschleunigungsvermögen oder ein mittleres Beschleunigungsvermögen des Antriebs.

Der Reaktionszeitpunkt kann weiter beispielsweise ein Zeitpunkt sein, zu dem eine vorbestimmte Momentenänderung zwischen Antrieb und Achse festgestellt werden kann. Insbesondere kann der Reaktionszeitpunkt als Zeit definiert sein, bei welcher der Betrag des Momentes mehr als etwa 1 Prozent, bevorzugt mehr als etwa 5 Prozent und besonders bevorzugt mehr als etwa 10 Prozent beträgt bezogen auf ein maximales anlegbares Moment oder ein mittleres anlegbares Moment.

Bevorzugt kann auch eine Kombination von zwei oder mehreren der obigen Kriterien zur Bestimmung des Reaktionszeitpunktes herangezogen werden.

In einer anderen Ausführung kann die Reaktionszeit insbesondere eine Öffnungszeit der Bremse sein. Dann wird in einer Ausführung die Bremse in Schritt b) von einem geschlossenen in einen geöffneten Zustand geschaltet, wobei der Reaktionszeitpunkt dann ein Zeitpunkt ist, zu dem sich der Bewegungszustand der Achse ändert, d.h. beispielsweise die Achse beginnt, sich zu bewegen, insbesondere ihre Geschwindigkeit einen vorgegebenen Minimalwert überschreitet, vorzugsweise von Null verschieden wird, oder sich die Achse mindestens um einen vorbestimmten Winkel dreht, beispielsweise um mindestens etwa 1 Grad, bevorzugt um mindestens etwa 5 Grad.

Beide Ausführungen können miteinander kombiniert sein, indem in einer Weiterbildung zunächst die Bremse in einem ersten Schritt b) von einem geöffneten in einen geschlossenen Zustand geschaltet und eine Reaktionszeit bzw. Schließzeit ermittelt und anschließend, gegebenenfalls nach einem Ermitteln eines Bewegungsspiels nach einem nachfolgend erläuterten zweiten Aspekt der vorliegenden Erfindung, die Bremse in einem zweiten Schritt b) von einem geschlossenen in einen geöffneten Zustand geschaltet und eine Öffnungszeit ermittelt wird. Gleichermaßen kann umgekehrt zunächst die Bremse in einem ersten Schritt b) von einem geschlossenen in einen geöffneten Zustand geschaltet und eine Öffnungszeit ermittelt und anschließend die Bremse in einem zweiten Schritt b) von einem geöffneten in einen geschlossenen Zustand geschaltet und eine Reaktionszeit bzw. Schließzeit ermittelt werden.

In einer Ausführung wird ein Wechsel des Bewegungszustandes der Achse bzw. der Reaktionszeitpunkt, insbesondere ein Anhalten bzw. Unterschreiten eines vorgegebenen Geschwindigkeitsmaximalwerts bzw. ein Beginn eines Bewegens bzw. Überschreiten eines vorgegebenen Geschwindigkeitsminimalwerts, erfasst, insbesondere mittels eines Positionserfassungsmittels, insbesondere, indem erfasst wird, ab wann sich eine durch das Positionserfassungsmittels erfasste Position bzw. Stellung, insbesondere Winkellage, der Achse ändert bzw. nicht mehr ändert. Zusätzlich oder alternativ wird in einer Ausführung ein Wechsel des Bewegungszustandes der Achse bzw. der Reaktionszeitpunkt mittels eines Bewegungszustandserfassungsmittels, beispielsweise eines Geschwindigkeitserfassungsmittels, eines Beschleunigungserfassungsmittels und/oder eines Momentenerfassungsmittels, erfasst, insbesondere, indem erfasst wird, ab wann eine durch das Geschwindigkeitserfassungsmittel erfasste Geschwindigkeit, insbesondere Drehzahl, der Achse einen vorgegebenen Maximalwert unter- bzw. Minimalwert überschreitet, vorzugsweise gleich bzw. ungleich Null wird. Zusätzlich oder alternativ wird in einer Ausführung ein Wechsel des Bewegungszustandes der Achse bzw. der Reaktionszeitpunkt mittels eines Beschleunigungserfassungsmittels erfasst, insbesondere, indem erfasst wird, ab wann sich eine durch das Beschleunigungserfassungsmittel erfasste Beschleunigung, insbesondere Winkelbeschleunigung, der Achse ändert bzw. nicht mehr ändert. So kann beispielsweise ein Reaktionszeitpunkt, zu dem sich der Bewegungszustand der Achse ändert, d.h. beispielsweise die Achse beginnt, sich zu bewegen, durch eine von Null verschiedene Beschleunigung erfasst werden. Das Bewegungszustandserfassungsmittel kann beispielsweise als Momentensensor ausgebildet sein, welcher bevorzugt im Gelenk zwischen zwei relativ zueinander schwenkbaren Gliedern der Maschine angeordnet ist. Alternativ oder zusätzlich kann die Ermittlung des Bewegungszustands durch eine Messung der Stromaufnahme eines Antriebs erfolgen, welcher die Achse aktuiert.

Erfindungsgemäß ist der Schaltzeitpunkt ein Zeitpunkt, zu dem ein Schalten der Bremse, insbesondere signal- und/oder energietechnisch, ausgelöst oder erfasst wird. Entsprechend ist in einer Weiterbildung der Schaltzeitpunkt ein Zeitpunkt, zu dem ein Schalten der Bremse signaltechnisch kommandiert bzw. ein Signal zum Schalten der Bremse ausgegeben oder empfangen wird. In einer anderen Weiterbildung ist der Schaltzeitpunkt ein Zeitpunkt, zu dem ein Schalten der Bremse energietechnisch ausgelöst bzw. eine Energieversorgung der Bremse getrennt oder verbunden bzw. eine solche Trennung bzw. Verbindung, insbesondere mittels eines Sensors, erfasst wird.

Nach einem zweiten Aspekt der vorliegenden Erfindung weist ein Verfahren zum Ermitteln eines Bewegungsspiels einer Bremse zumindest einer zugeordneten Achse einer mehrachsigen Maschine, insbesondere eines Roboters oder einer Werkzeugmaschine, die Schritte auf:

i) gegensinniges Aktuieren der Achse bei geschlossener Bremse; und
j) Erfassen eines Bewegungsspiels zwischen gegensinnigen maximalen Auslenkungen der Achse.

Dabei wird in einer Ausführung das Bewegungsspiel erfasst, während die Achse gegensinnig aktuiert wird bzw. ist. Bevorzugt kann die Aktuierung der Achse gestoppt werden, wenn die Bremsreaktion erfasst wurde.

In einer Ausführung werden die Schritte i), j) ein- oder mehrfach wiederholt bzw. die Achse mehrfach bei geschlossener Bremse gegensinnig aktuiert und ein (Gesamt-)Bewegungsspiel aus dabei erfassten Einzel-Bewegungsspielen zwischen gegensinnigen maximalen Auslenkungen der Achse ermittelt. Das (Gesamt-)Bewegungsspiel kann insbesondere ein Maximal-, Minimaloder Mittelwert der Einzel-Bewegungsspiele sein. Hierdurch kann vorteilhaft die Präzision und/oder Zuverlässigkeit des ermittelten Bewegungsspiels verbessert werden.

Der erste und zweite Aspekt können, wie vorstehend bereits erläutert, in einer Ausführung miteinander kombiniert sein bzw. werden, insbesondere, indem zunächst die Bremse bei aktuierter Achse geschlossen und eine Reaktionszeit bzw. Schließzeit ermittelt, anschließend die Achse bei (weiterhin) geschlossener Bremse ein- oder mehrfach gegensinnig aktuiert und dabei ein Bewegungsspiel ermittelt, und anschließend bei aktuierter Achse die geschlossene Bremse geöffnet und dabei eine Öffnungszeit ermittelt wird. Gleichermaßen kann in einer Ausführung auch nur der erste oder nur der zweite Aspekt verwirklicht werden. Entsprechend beziehen sich die vorstehenden und nachfolgenden Erläuterungen sowohl auf den ersten als auch den zweiten Aspekt.

In einer Ausführung wird die Achse motorisch aktuiert, insbesondere gegensinnig bzw. in entgegengesetzte Richtungen und/oder wenigstens in einem Zeitraum zwischen einem Schaltzeitpunkt, zu dem die Bremse geschaltet wird, und dem Reaktionszeitraum, zu dem ein Bewegungszustand der Achse wechselt.

In einer Ausführung wird die Achse motorisch mit einer vorgegebenen Kraft aktuiert bzw. die Achse motorisch mit einer vorgegebenen Kraft beaufschlagt, wobei zur kompakteren Darstellung vorliegend auch ein antiparalleles Kräftepaar bzw. Drehmoment verallgemeinernd als Kraft bezeichnet wird.

Allgemein kann eine Reaktionszeit bzw. ein Bewegungsspiel kraftspezifisch ermittelt werden. So kann, wie einleitend erläutert, eine Reaktionszeit bzw. Schließzeit eine Zeit zwischen einem Schalten der Bremse und einem Reaktionszeitpunkt sein, ab dem die Bremse zu einer Änderung bzw. einem Wechsel des Bewegungszustands der Achse führt. Dies kann beispielsweise dadurch bewirkt werden, dass die Bremse eine bestimme Mindestbremskraft aufbringt bzw. aufbringen kann, insbesondere eine (maximale) Nennbremskraft. Analog kann eine Öffnungszeit eine Zeit zwischen einem Schalten der Bremse und einem Reaktionszeitpunkt sein, ab dem die Bremse höchstens noch eine bestimme Maximalbremskraft aufbringt bzw. aufbringen kann, insbesondere vollständig gelüftet ist bzw., wenigstens im Wesentlichen, keine Bremskraft mehr aufbringt bzw. aufbringen kann. Entsprechend kann ein Bewegungsspiel das Spiel sein, um das die Achse durch eine bestimmte Kraft, insbesondere in Höhe der (maximalen) Nennbremskraft, bewegt wird bzw. werden kann.

Diese Kraft wird in einer Ausführung reibungs- und/oder gewichtskraftabhängig vorgegeben. Denn auf die Achse können zusätzlich zu der motorisch aufgeprägten Kraft Reibungs- und/oder Gewichtskräfte wirken, die in Summe der Bremse entgegenwirken bzw. diese unterstützen können. So kann in einer Ausführung vorteilhaft eine Reaktionszeit bzw. ein Bewegungsspiel gesamtkraftspezifisch ermittelt werden, wobei die Gesamtkraft bzw. Summe auf die Achse wirkender Kräfte Reibungs-, Gewichts- und motorisch aufgeprägte Kräfte umfassen kann. Insbesondere kann die Kraft, mit der die Achse motorisch aktuiert bzw. beaufschlagt wird, um eine dieser Aktuierung entgegenwirkende Reibungs- und/oder Gewichtskraft erhöht und/oder um eine diese Aktuierung unterstützende Gewichtskraft reduziert werden.

Insbesondere im Stillstand der Achse ist die notwendige aufzubringende Kraft, um eine Positionsänderung der Achse zu erreichen, abhängig von der Reibung $F_{Reibung}$, die in beiden Richtungen in etwa gleich wirkt und der Gravitation $F_{Gravitation}$, die richtungsabhängig wirkt. Die Bremse kann in beide Richtungen eine gewisse Mindestbremskraft $F_{Bremse}$ aufbringen. Die beiden Kräfte, die aufgebracht werden müssen, um ein Spiel bzw. eine Positionsdifferenz erkennen zu können, können daher in einer Ausführung maximal zu

$$F_1 = F_{Gravitation} - (F_{Reibung} + F_{Bremse})$$

und

$$F_2 = F_{Gravitation} + (F_{Reibung} + F_{Bremse})$$

gewählt werden. Die Differenz der sich jeweils ergebenden Positionen der Achse bei Anlegen der Kräfte $F_1$ und $F_2$ kann das Spiel definieren.

Insbesondere eine Gewichtskraft, in bestimmtem Umfang auch eine Reibungskraft, hängt von einer Stellung der Achsen der Maschine ab. Daher wird in einer Ausführung die motorisch aufgeprägte Kraft zum Aktuieren der Achse maschinenstellungsabhängig vorgegeben.

Die Reibungs- und/oder Gewichtskraftabhängigkeit kann in einer Ausführung modellbasiert oder auf Basis einer vorhergehenden Aktuierung bestimmt werden.

In einer Ausführung wird die Kraft, mit der die Achse motorisch aktuiert bzw. beaufschlagt wird, auf Basis einer, insbesondere maximalen, Nennkraft der Bremse vorgegeben. Wie bereits erläutert, kann eine Reaktionszeit bzw. ein Bewegungsspiel kraftspezifisch ermittelt werden. Durch die Vorgabe der Kraft auf Basis einer, insbesondere maximalen, Nennkraft der Bremse kann vorteilhafterweise eine Nennbelastung der Bremse erfasst werden, insbesondere eine Reaktionszeit bzw. Schließzeit ermittelt werden, bis die Bremse ihre Nennkraft aufbringt bzw. aufbringen kann, oder ein Bewegungsspiel bei maximaler Nennbelastung der Bremse ermittelt werden. In einer Ausführung beträgt die vorgegebene Kraft nur einen Teil einer, insbesondere maximalen, Nennkraft der Bremse, beispielsweise 10%, 50% oder 75%. Hierdurch kann in einer Ausführung beispielsweise eine Öffnungszeit ermittelt werden, ab der die Bremse diesen Anteil nicht mehr aufbringt bzw. aufbringen kann, d.h. die Achse beginnt, sich zu bewegen.

Zusätzlich oder alternativ wird in einer Ausführung die Achse mit einer vorgegebenen Geschwindigkeit, insbesondere Drehzahl, motorisch aktuiert. Insbesondere kann in einer Ausführung eine Geschwindigkeit vorgegeben und die Achse geschwindigkeitsgeregelt aktuiert bzw. die sie aktuierende motorische Kraft geschwindigkeitsgeregelt vorgegeben werden, wobei in einer Weiterbildung diese Kraft dann auf einen vorgegebenen Wert, insbesondere eine (maximale) Nennkraft der Bremse, begrenzt sein kann. Hierdurch kann in besonders einfacher und präziser Weise eine Reaktionszeit bzw. ein Bewegungsspiel ermittelt werden.

Wie einleitend erläutert, ermöglicht die Kenntnis einer aktuellen Reaktionszeit und/oder eines aktuellen Bewegungsspiels insbesondere ein Überwachen einer mehrachsigen Maschine, insbesondere eines Roboters, insbesondere daraufhin, ob eine oder mehrere Bremsen, insbesondere aufgrund von Verschleiß, zu große Schließ- und/oder Öffnungszeiten und/oder Bewegungsspiele aufweisen. Entsprechend wird nach einem weiteren Aspekt der vorliegenden Erfindung eine aktuelle Reaktionszeit einer oder mehrerer Bremsen der Maschine nach einem hier beschriebenen Verfahren ermittelt und eine Fehlerreaktion ausgelöst, wenn die ermittelte Reaktionszeit außerhalb eines vorgegebenen Bereichs liegt. Zusätzlich oder alternativ wird ein aktuelles Bewegungsspiel einer oder mehrerer Bremsen der Maschine nach einem hier beschriebenen Verfahren ermittelt und eine Fehlerreaktion ausgelöst, wenn das ermittelte Bewegungsspiel außerhalb eines vorgegebenen Bereichs liegt.

Der Bereich wird in einer Ausführung jeweils auf Basis einer Reaktionszeit bzw. eines Bewegungsspiels vorgegeben, der bei einer vorangegangenen Durchführung eines hier beschriebenen Verfahrens ermittelt worden ist. Hierdurch kann vorteilhaft eine Veränderung der Bremse(n) detektiert, insbesondere protokoliert werden.

Die Fehlerreaktion kann insbesondere die Ausgabe einer Fehlermeldung und/oder ein Stoppen der Maschine, insbesondere ein Schließen der Bremse(n), umfassen.

Zusätzlich oder alternativ zu einem Überwachen kann, wie einleitend beschrieben durch die Berücksichtigung einer aktuellen Reaktionszeit und/oder eines aktuellen Bewegungsspiels einer mehrachsigen Maschine, insbesondere eines Roboters, dessen Betrieb verbessert werden. Entsprechend wird nach einem weiteren Aspekt der vorliegenden Erfindung eine aktuelle Reaktionszeit einer oder mehrerer Bremsen der Maschine nach einem hier beschriebenen Verfahren ermittelt und die Maschine unter Berücksichtigung dieser Reaktionszeit betrieben, insbesondere ihre Bewegung geplant, insbesondere Zeitpunkte von Öffnungs- und/oder Schließbefehlen in einem Steuerprogramm der Maschine auf Basis der ermittelten Reaktionszeit(en) vorgegeben, insbesondere angepasst. Zusätzlich oder alternativ wird ein aktuelles Bewegungsspiel einer oder mehrerer Bremsen der Maschine nach einem hier beschriebenen Verfahren ermittelt und die Maschine unter Berücksichtigung dieser Reaktionszeit betrieben, insbesondere ihre Bewegung geplant, insbesondere Bewegungsbefehle in einem Steuerprogramm der Maschine auf Basis des ermittelten Bewegungsspiels vorgegeben, insbesondere angepasst.

Nach einem weiteren Aspekt der vorliegenden Erfindung ist ein System zum Betreiben und/oder Überwachen einer mehrachsigen Maschine, insbesondere eines Roboters, zur Durchführung eines hier beschriebenen Verfahrens hard- und/oder softwaretechnisch eingerichtet.

Hierzu weist es in einer Ausführung Mittel zum Aktuieren der Achse, Mittel zum Schalten der Bremse und Mittel zum Ermitteln einer Reaktionszeit zwischen einem Schaltzeitpunkt und einem Reaktionszeitpunkt, zu dem ein Bewegungszustand der Achse wechselt, auf.

In einer Ausführung weist das System Positions-, Geschwindigkeits- oder Beschleunigungserfassungsmittel zum Erfassen eines Wechsels des Bewegungszustandes der Achse und/oder Mittel zum Erfassen des Schaltzeitpunkt, zu dem ein Schalten der Bremse, insbesondere signal- und/oder energietechnisch, ausgelöst wird, auf.

In einer Ausführung weist das System Mittel zum gegensinnigen Aktuieren der Achse bei geschlossener Bremse und Mittel zum Erfassen eines Bewegungsspiels zwischen gegensinnigen maximalen Auslenkungen der Achse auf.

In einer Ausführung weist das System Mittel zum motorischen Aktuieren der Achse mit einer vorgegebenen Geschwindigkeit und/oder einer vorgegebenen Kraft auf, in einer Weiterbildung Mittel zum Vorgeben der Kraft reibungs- und/oder gewichtskraft-, insbesondere maschinenstellungsabhängig, insbesondere modellbasiert oder auf Basis einer vorhergehenden Aktuierung, und/oder auf Basis einer, insbesondere maximalen, Nennkraft der Bremse

In einer Ausführung weist das System Mittel zum Betreiben einer mehrachsigen Maschine, insbesondere eines Roboters, unter Berücksichtigung der Reaktionszeit bzw. des Bewegungsspiels, insbesondere zum Planen ihre Bewegung, auf, die bzw. das durch das Mittel zum Ermitteln einer Reaktionszeit bzw. Mittel zum Erfassen eines Bewegungsspiels ermittelt bzw. erfasst wird.

In einer Ausführung weist das System Mittel zum Überwachen einer mehrachsigen Maschine, insbesondere eines Roboters, auf Basis der Reaktionszeit bzw. des Bewegungsspiels auf, die bzw. das durch das Mittel zum Ermitteln einer Reaktionszeit bzw. Mittel zum Erfassen eines Bewegungsspiels ermittelt bzw. erfasst wird, sowie Mittel zum Auslösen einer Fehlerreaktion, wenn die ermittelte Reaktionszeit bzw. das ermittelte Bewegungsspiel außerhalb eines vorgegebenen Bereichs liegt.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Maschine betreiben bzw. überwachen kann.

Weitere Vorteile und Merkmale ergeben sich aus den Unteransprüchen und den Ausführungsbeispielen. Hierzu zeigt, teilweise schematisiert:

Fig. 1:     einen Ablauf eines Verfahrens nach einer Ausführung der vorliegenden Erfindung; und

Fig. 2:     einen Roboter mit einem System zur Durchführung des Verfahrens nach einer Ausführung der vorliegenden Erfindung.

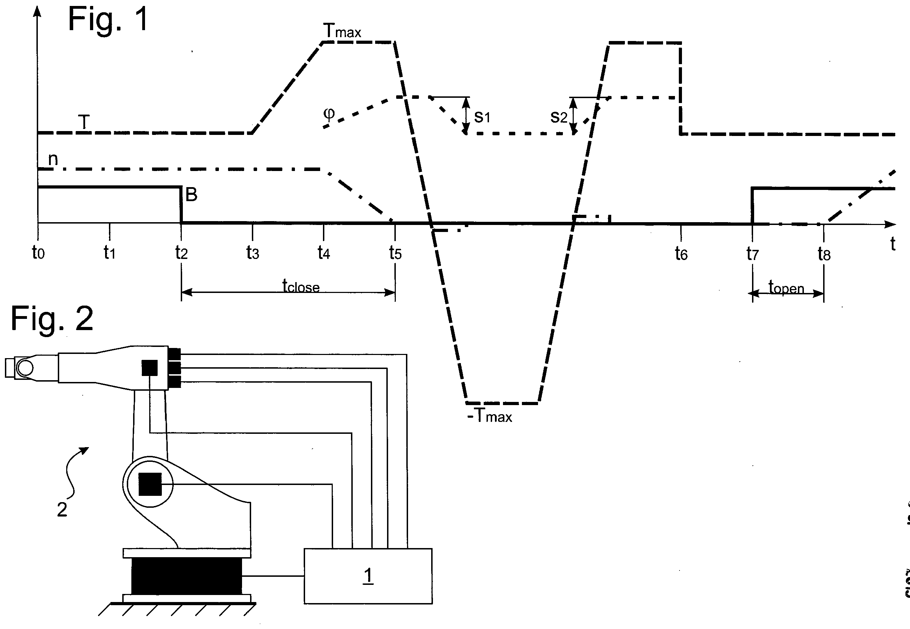

Fig. 1 zeigt einen Ablauf eines Verfahrens nach einer Ausführung der vorliegenden Erfindung über der Zeit t als Abszisse. In Ordinatenrichtung sind ausgezogen ein Schaltzustand B einer Bremse einer Achse eines mehrachsigen Roboters 2 (vgl. Fig. 2), gestrichelt ein Drehmomentverlauf T eines Antriebs der Achse, strichpunktiert ein Geschwindigkeitsverlauf n der Achse und punktiert teilweise ein Positionsverlauf $\varphi$ der Achse dargestellt.

In einem ersten Zeitraum $[t_0, t_1]$ wird die Achse ungebremst aktuiert. Dabei werden Gewichtskraft- und Reibungsdrehmomente ermittelt, um die beim anschließenden Ermitteln von Reaktionszeiten und Bewegungsspiel das Antriebsdrehmoment T stellungsabhängig reduziert bzw. vergrößert wird. Im Ausführungsbeispiel sind zur übersichtlicheren Darstellung Gewichtskraft- und Reibungseinflüsse vernachlässigt, insbesondere kann sich das Ausführungsbeispiel exemplarisch auf die erste, vertikale Drehachse des Roboters 2 beziehen.

In einem zweiten Zeitraum $[t_1, t_5]$ wird die Achse drehzahlgeregelt aktuiert, wobei ein Antriebsdrehmoment auf ein maximales Nennmoment $T_{max}$ der Bremse begrenzt ist.

Zu einem Zeitpunkt $t_2$ wird die Bremse in einen geschlossenen Zustand geschaltet. Als erster Schaltzeitpunkt $t_2$ wird der Zeitpunkt erfasst, zu dem dieses Schalten der Bremse signal- und/oder energietechnisch ausgelöst oder erfasst wird, beispielsweise ein entsprechendes Schließsignal ausgegeben oder empfangen oder ein Abfall einer Energieversorgung der aktiv gelüfteten Bremse erfasst wird. In Fig. 1 ist dies durch einen Sprung des Schaltzustandes B angedeutet

Zu einem Zeitpunkt $t_3$ beginnt die Bremse, eine Bremswirkung auf die Achse auszuüben. Dies wird zunächst durch ein entsprechend ansteigendes Antriebsdrehmoment T des drehzahlgeregelten Antriebs kompensiert, bis das maximale Nenndrehmoment der Bremse erreicht ist. Die Verzögerung zwischen dem Schalten der Bremse und dem Beginn ihrer Bremswirkung kann beispielsweise aus mechanischen, hydraulischen, pneumatischen, (elektro)magnetischen, signal- und/oder energietechnischen Trägheiten bzw. Induktivitäten resultieren.

Ab dem Zeitpunkt $t_4$ verlangsamt die Bremse die Achse gegen das auf $T_{max}$ begrenzte Antriebsdrehmoment, bis zu einem Zeitpunkt $t_5$ die Achse anhält. Dieser Zeitpunkt $t_5$ wird durch einen Positions- oder Geschwindigkeitssensor der Achse erfasst und von einer Steuerung 1 des Roboters 2 (vgl. Fig. 2) als erster Reaktionszeitpunkt bestimmt.

Die Steuerung ermittelt eine Differenz zwischen dem ersten Schaltzeitpunkt $t_2$ und dem ersten Reaktionszeitpunkt $t_5$ als aktuelle Reaktionszeit bzw. Schließzeit $t_{close}$.

In einem anschließenden dritten Zeitraum [$t_5$, $t_6$] aktuiert der Antrieb die Achse bei weiterhin geschlossener Bremse gegensinnig zunächst mit dem negativen maximalen Nennmoment $-T_{max}$ der Bremse und anschließend erneut mit dem (positiven) maximalen Nennmoment $T_{max}$.

Dabei erfasst der Positionssensor der Achse jeweils ein Einzel-Bewegungsspiel $s_1$ bzw. $s_2$ zwischen gegensinnigen maximalen Auslenkungen φ der Achse (vgl. Fig. 1).

Hieraus ermittelt die Steuerung 1 das aktuelle (Gesamt-)Bewegungsspiel der Bremse, beispielsweise durch Mittelung der Werte $s_1$, $s_2$ oder Auswahl des größeren Wertes.

In einem anschließenden vierten Zeitraum [$t_6$, $t_8$] aktuiert der Antrieb die Achse bei weiterhin geschlossener Bremse mit beispielsweise 50% des maximalen Nenndrehmoments $T_{max}$ der Bremse.

Zu einem Zeitpunkt $t_7$ wird die Bremse in einen geöffneten Zustand geschaltet. Als zweiter Schaltzeitpunkt $t_7$ wird der Zeitpunkt erfasst, zu dem dieses Schalten der Bremse signal- und/oder energietechnisch ausgelöst oder erfasst wird, beispielsweise ein entsprechendes Öffnungssignal ausgegeben oder empfangen oder ein Anstieg einer Energieversorgung der aktiv gelüfteten Bremse erfasst wird. In Fig. 1 ist dies durch einen (Rück)Sprung des Schaltzustandes B angedeutet.

Zum Zeitpunkt $t_8$ hat sich die Bremswirkung der Bremse auf das Antriebsdrehmoment $0,5 \cdot T_{max}$ abgebaut, die Achse beginnt, sich zu bewegen (n > 0). Dieser Zeitpunkt $t_8$ wird durch den Positions- oder Geschwindigkeitssensor oder einen Beschleunigungssensor der Achse erfasst und von der Steuerung 1 als zweiter Reaktionszeitpunkt bestimmt.

Die Steuerung 1 ermittelt eine Differenz zwischen dem zweiten Schaltzeitpunkt $t_7$ und dem zweiten Reaktionszeitpunkt $t_8$ als aktuelle Öffnungszeit $t_{open}$.

Anschließend plant die Steuerung 1 eine Bewegung des Roboters 2 unter Berücksichtigung dieser ermittelten aktuellen Reaktionszeiten $t_{close}$, $t_{open}$, indem sie Schaltzeitpunkte für die Bremse in einem Steuerprogramm entsprechend anpasst. Außerdem überwacht die Steuerung 1 den Roboter 2 und löst eine Fehlerreaktion aus, gibt beispielsweise eine Fehlermeldung aus, wenn eine der ermittelten aktuellen Reaktionszeiten oder das ermittelte Bewegungsspiel außerhalb eines vorgegebenen Bereichs liegt.

Die Steuerung 1 sowie die Sensoren zum Erfassen der Schaltzeitpunkte, der Wechsel des Bewegungszustandes und der Bewegungsspiele bilden ein System nach einer Ausführung der vorliegenden Erfindung mit zur Durchführung des hier beschriebenen Verfahrens hard- und/oder softwaretechnisch eingerichteten Mitteln.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

Bezugszeichenliste

| | |
|---|---|
| 1 | Steuerung |
| 2 | Roboter |
| T | Antriebsdrehmoment |
| n | Drehzahl |
| B | Bremsschaltzustand |
| φ | Achsposition |
| $t_{(...)}$ | Zeit(punkt) |

**Patentansprüche**

**1.** Verfahren zum Ermitteln einer Reaktionszeit einer Bremse zumindest einer zugeordneten Achse einer mehrachsigen Maschine, insbesondere eines Roboters (2) oder einer Werkzeugmaschine, mit den Schritten:

Aktuieren der zumindest einen zugeordneten Achse;

Schalten der Bremse, wobei ein Schaltzeitpunkt ein Zeitpunkt ($t_2$, $t_7$) ist, zu dem das Schalten der Bremse, insbesondere signal- und/oder energietechnisch, ausgelöst oder erfasst wird; und Ermitteln einer Reaktionszeit ($t_{close}$, $t_{open}$) zwischen dem Schaltzeitpunkt ($t_2$, $t_7$) und einem Reaktionszeitpunkt ($t_5$, $t_8$), zu dem ein Bewegungszustand der zumindest einen zugeordneten Achse wechselt, wobei die Bremse von einem geöffneten in einen geschlossenen Zustand geschaltet wird und der Reaktionszeitpunkt ein Zeitpunkt ($t_5$) ist, an dem die Drehzahl der zugeordneten Achse um mehr als etwa 1 Prozent gegenüber der Drehzahl zum Schaltzeitpunkt reduziert ist oder ein Zeitpunkt ($t_5$) ist, an dem das zur Aufrechterhaltung der Geschwindigkeit notwendige Moment um mehr als etwa 1 Prozent ansteigt oder die Bremse von einem geschlossenen in einen geöffneten Zustand geschaltet wird und der Reaktionszeitpunkt ein Zeitpunkt ($t_8$) ist, zu dem die zumindest eine zugeordnete Achse beginnt, sich zu bewegen.

2. Verfahren nach dem vorhergehenden Anspruch, **dadurch gekennzeichnet, dass** ein Wechsel des Bewegungszustandes der zumindest einen zugeordneten Achse mittels eines Positions-, Geschwindigkeits- oder Beschleunigungserfassungsmittel erfasst wird.

3. Verfahren nach einem der vorhergehenden Ansprüche, **dadurch gekennzeichnet, dass** es zum Ermitteln eines Bewegungsspiels einer Bremse zumindest einer zugeordneten Achse der mehrachsigen Maschine die Schritte aufweist:

gegensinniges Aktuieren der zumindest einen zugeordneten Achse bei geschlossener Bremse; und
Erfassen eines Bewegungsspiels ($s_1$, $s_2$) zwischen gegensinnigen maximalen Auslenkungen der zumindest einen zugeordneten Achse.

4. Verfahren nach Anspruch 3, **dadurch gekennzeichnet, dass** die zumindest eine zugeordnete Achse mehrfach bei geschlossener Bremse gegensinnig aktuiert und ein Gesamt-Bewegungsspiel aus dabei erfassten Einzel-Bewegungsspielen ($s_1$, $s_2$) zwischen gegensinnigen maximalen Auslenkungen der zumindest einen zugeordneten Achse ermittelt wird.

5. Verfahren nach einem der Ansprüche 3 und 4, **dadurch gekennzeichnet, dass** die zumindest eine zugeordnete Achse mit einer vorgegebenen Geschwindigkeit, insbesondere Drehzahl (n), und/oder einer vorgegebenen Kraft, insbesondere einem vorgegebenen Drehmoment ($T_{max}$, $0{,}5 \cdot T_{max}$), motorisch aktuiert wird.

6. Verfahren nach Anspruch 5, **dadurch gekennzeichnet, dass** die Kraft, insbesondere modellbasiert oder auf Basis einer vorhergehenden Aktuierung, reibungs- und/oder gewichtskraft-, insbesondere maschinenstellungsabhängig, und/oder auf Basis einer, insbesondere maximalen, Nennkraft ($T_{max}$) der Bremse vorgegeben wird.

7. Verfahren zum Betreiben einer mehrachsigen Maschine, insbesondere eines Roboters (2), wobei eine Reaktionszeit ($t_{close}$, $t_{open}$), insbesondere eine Reaktionszeit ($t_{close}$, $t_{open}$) und ein Bewegungsspiel ($s_1$, $s_2$). wenigstens einer Bremse einer Achse der Maschine nach einem Verfahren nach einem der vorhergehenden Ansprüche ermittelt und die Maschine unter Berücksichtigung dieser Reaktionszeit bzw. dieses Bewegungsspiels betrieben, insbesondere ihre Bewegung geplant wird.

8. Verfahren zum Überwachen einer mehrachsigen Maschine, insbesondere eines Roboters, wobei eine Reaktionszeit ($t_{close}$, $t_{open}$)), insbesondere eine Reaktionszeit ($t_{close}$, $t_{open}$) und ein Bewegungsspiel ($s_1$, $s_2$), wenigstens einer Bremse einer Achse der Maschine nach einem Verfahren nach einem der vorhergehenden Ansprüche ermittelt und eine Fehlerreaktion ausgelöst wird, wenn die ermittelte Reaktionszeit bzw. das ermittelte Bewegungsspiel außerhalb eines vorgegebenen Bereichs liegt.

9. System (1) zum Betreiben und/oder Überwachen einer mehrachsigen Maschine, insbesondere eines Roboters (2), das zur Durchführung eines Verfahrens nach einem der vorhergehenden Ansprüche eingerichtet ist.

10. Computerprogrammprodukt mit einem Programmcode, der auf einem von einem Computer lesbaren Medium gespeichert ist, zur Durchführung eines Verfahrens nach einem der vorhergehenden Ansprüche.

## Claims

1. A method of determining a reaction time of a brake of at least one associated axis of a multi-axis machine, in particular of a robot (2) or a machine tool, comprising the steps of:

actuating the at least one associated axis;

switching the brake, wherein a switching point in time is a point in time ($t_2$, $t_7$) at which the switching of the brake is triggered or detected, in particular in terms of signalling and / or power engineering; and

determining a reaction period of time ($t_{close}$, $t_{open}$) between the switching point in time ($t_2$, $t_7$) and a reaction point in time ($t_5$, $t_8$) at which a state of movement of the at least one associated axis changes, wherein the brake is switched from an open state to a closed state and the reaction point in time is a point in time ($t_5$) at which the rotational speed of the associated axis is reduced by more than about 1 per cent in relation to the rotational speed at the switching point in time, or is a point in time ($t_5$) at which the torque necessary to maintain the speed increases by more than about 1 per cent, or the brake is switched from a closed state to an open state and the reaction point in time is a point in time ($t_8$) at which the at least one associated axis begins to move.

2. The method according to the preceding claim, **characterised in that** a change in the state of movement of the at least one associated axis is detected by means of a position, speed or acceleration detection means.

3. The method according to any one of the preceding claims, **characterised in that**, in order to determine a play of movement of a brake of at least one associated axis of the multi-axis machine, it comprises the steps of:

actuating the at least one associated axis in the opposite direction when the brake is closed; and

detecting a play of movement ($s_1$, $s_2$) between maximum deflections in opposite directions of the at least one associated axis.

4. The method according to claim 3, **characterised in that** the at least one associated axis is actuated in opposite directions several times when the brake is closed, and a total play of movement is determined from individual plays of movement ($s_1$, $s_2$) detected, during the course of this, between maximum deflections, in opposite directions, of the at least one associated axis.

5. The method according to any one of the claims 3 and 4, **characterised in that** the at least one associated axis is actuated by a motor at a predetermined speed, in particular with a predetermined rotational speed (n), and / or with a predetermined force, in particular with a predetermined torque ($T_{max}$, 0.5 * $T_{max}$).

6. The method according to claim 5, **characterised in that** the force is predetermined as a function of friction and / or as a function of weight force, in particular as a function of a machine position, and / or on the basis of a nominal force ($T_{max}$) of the brake, in particular on the basis of a maximum nominal force ($T_{max}$) of the brake, in particular in a model-based manner or on the basis of a preceding actuation.

7. A method of operating a multi-axis machine, in particular a robot (2), wherein a reaction time ($t_{close}$, $t_{open}$), in particular a reaction time ($t_{close}$, $t_{open}$) and a play of movement ($s_1$, $s_2$), of at least one brake of an axis of the machine is determined according to a method according to any one of the preceding claims, and the machine is operated, in particular its movement is planned, taking into account this reaction time or this play of movement.

8. The method of monitoring a multi-axis machine, in particular a robot, wherein a reaction time ($t_{close}$, $t_{open}$), in particular a reaction time ($t_{close}$, $t_{open}$) and a play of movement ($s_1$, $s_2$), of at least one brake of an axis of the machine is determined according to a method according to any one of the preceding claims, and an error reaction is triggered if the reaction time which has been determined or the play of movement which has been determined lies outside a predetermined range.

9. A system (1) for operating and / or monitoring a multi-axis machine, in particular a robot (2), which is arranged to carry out a method according to any one of the preceding claims.

10. A computer program product with a program code which is stored on a medium which is readable by a computer, and which is for carrying out a method according to any one of the preceding claims.

**Revendications**

1. Procédé de détermination d'un temps de réaction d'un frein d'au moins un axe associé d'une machine multiaxiale, en particulier d'un robot (2) ou d'une machine-outil, avec les étapes de :

actionnement de l'au moins un axe associé ;

commutation du frein, dans lequel un moment de commutation est un moment ($t_2$, $t_7$), auquel la commutation du frein est déclenchée ou détectée, en particulier par signal et/ou énergie ; et

détermination d'un temps de réaction ($t_{close}$, $t_{open}$) entre le moment de commutation ($t_2$, $t_7$) et un moment de réaction ($t_5$, $t_8$), auquel un état de déplacement de l'au moins un axe associé change, dans lequel le frein est commuté d'un état ouvert à un état fermé et le moment de réaction est un moment ($t_5$) auquel la vitesse de rotation de l'axe associé est réduite de plus d'environ un pour cent par rapport à la vitesse de rotation au moment de commutation ou est un moment ($t_5$) auquel le couple nécessaire au maintien de la vitesse augmente de plus d'environ un pour cent ou le frein est commuté d'un état fermé à un état ouvert et le moment de réaction est un moment ($t_8$) auquel l'au moins un axe associé commence à se déplacer.

2. Procédé selon la revendication précédente, **caractérisé en ce qu'**un changement de l'état de déplacement de l'au moins un axe associé est détecté au moyen d'un moyen de détection de position, de vitesse ou d'accélération.

3. Procédé selon l'une quelconque des revendications précédentes, **caractérisé en ce qu'**il présente pour la détermination d'un jeu de déplacement d'un frein d'au moins un axe associé de la machine multiaxiale, les étapes de :

   actionnement dans le sens opposé de l'au moins un axe associé lorsque le frein est fermé ; et détection d'un jeu de déplacement ($s_1$, $s_2$) entre des déviations maximum de sens opposé de l'au moins un axe associé.

4. Procédé selon la revendication 3, **caractérisé en ce que** l'au moins un axe associé est actionné plusieurs fois dans le sens opposé lorsque le frein est fermé et un jeu de déplacement global est déterminé à partir des jeux de déplacement individuels ($s_1$, $s_2$) ainsi détectés entre des déviations maximum de sens opposé de l'au moins un axe associé.

5. Procédé selon l'une quelconque des revendications 3 et 4, **caractérisé en ce que** l'au moins un axe associé est actionné par moteur avec une vitesse prédéfinie, en particulier une vitesse de rotation ($n$), et/ou une force prédéfinie, en particulier un couple prédéfini ($T_{max}$, $0{,}5 \cdot T_{max}$).

6. Procédé selon la revendication 5, **caractérisé en ce que** la force est prédéfinie, en particulier basée sur un modèle ou sur la base d'un actionnement précédent, en fonction du frottement et/ou du poids, en particulier du réglage de la machine, et/ou sur la base d'une force nominale ($T_{max}$), en particulier maximum, du frein.

7. Procédé de fonctionnement d'une machine multiaxiale, en particulier d'un robot (2), dans lequel un temps de réaction ($t_{close}$, $t_{open}$), en particulier un temps de réaction ($t_{close}$, $t_{open}$) et un jeu de déplacement ($s_1$, $s_2$), d'au moins un frein d'un axe de la machine est déterminé selon un procédé selon l'une quelconque des revendications précédentes et la machine fonctionne en tenant compte de ce temps de réaction ou de ce jeu de déplacement, en particulier son déplacement est planifié.

8. Procédé de surveillance d'une machine multiaxiale, en particulier d'un robot, dans lequel un temps de réaction ($t_{close}$, $t_{open}$), en particulier un temps de réaction ($t_{close}$, $t_{open}$) et un jeu de déplacement ($s_1$, $s_2$), d'au moins un frein d'un axe de la machine est déterminé selon un procédé selon l'une quelconque des revendications précédentes et une réaction d'erreur est déclenchée lorsque le temps de réaction déterminé ou le jeu de déplacement déterminé se trouve en dehors d'une plage prédéfinie.

9. Système (1) de fonctionnement et/ou de surveillance d'une machine multiaxiale, en particulier d'un robot (2), qui est aménagé pour la réalisation d'un procédé selon l'une quelconque des revendications précédentes.

10. Produit de programme informatique avec un code de programme, qui est enregistré sur un support lisible par un ordinateur, pour la réalisation d'un procédé selon l'une quelconque des revendications précédentes.

Fig. 1

Fig. 2

EP 3 050 682 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2108933 A2

- DE 102012003479 A1